# DEMANDE DE BREVET EUROPEEN

(11) **EP 4 827 091 A1**
(43) Date de publication de la demande: **21.10.2026**
(21) Numéro de dépôt: 26172996.6
(22) Date de dépôt: 17.04.2026
(51) Int. Cl.: H04N 19/34

(54) **PROCÉDÉ DE COMPRESSION D'UNE IMAGE, PROCÉDÉ D'ANALYSE ET DISPOSITIFS ASSOCIÉS**

(30) Priorité: 18.04.2025 FR 2504188
(71) Demandeur: THALES, 92190 Meudon (FR); Centre National de la Recherche Scientifique, 75016 Paris (FR); Université de Bordeaux, 33000 Bordeaux (FR); Institut Polytechnique de Bordeaux, 33400 Talence (FR)
(72) Inventeur: COTTIN, Guillaume, 33700 MERIGNAC (FR); TAILLIEZ, Franck, 33700 MERIGNAC (FR); SOUYRI, Benoît, 33700 MERIGNAC (FR); CORRETJA, Vincent, 33700 MÉRIGNAC (FR); Lavigne, Loic, 33700 MERIGNAC (FR); Saracco, Jérôme, 33400 TALENCE (FR); Cazaurang, Franck, 33405 TALENCE (FR)
(74) Mandataire: Lavoix

(57) **Abrégé**

La présente invention concerne un procédé de compression d'une image. Le procédé comprend :
- obtention (E100) d'une image binaire comportant des lignes de pixels, chaque pixel comprenant un premier et un deuxième ensembles,
- choix (E102) d'un nombre d'éléments du premier ensemble,
- formation (E104) :
- d'un flux de bits de poids fort des premiers ensembles ;
- d'un flux des bits de poids faible des deuxièmes ensembles ;

- établissement (E106) d'une matrice d'ensemble comportant des termes agencés en lignes et colonnes, les termes étant calculés à partir d'un flux choisi, chaque terme étant égal à la concaténation de plusieurs ensembles contigus du flux choisi en parcourant successivement chaque ligne de la matrice d'ensemble, le nombre d'ensembles contigus dépendant du nombre d'éléments choisis pour le premier ensemble, et
- compression (E110) de la matrice établie pour obtenir une matrice compressée correspondant à la compression de l'image.

## Description

La présente invention concerne un procédé de compression d'une image. Elle se rapporte aussi à un procédé d'analyse d'une image. Elle concerne aussi des dispositifs impliqués dans la mise en œuvre d'au moins un procédé précédent, à savoir un dispositif de compression, un aéronef, un produit programme d'ordinateur et un support lisible d'informations.

Dans le domaine de l'observation d'environnement, et notamment de l'identification d'objet, il est souvent utilisé des images radar à haute résolution obtenues par la technique de radar à synthèse d'ouverture. Cette technique est plus souvent désignée sous l'acronyme SAR qui renvoie à la dénomination anglaise correspondante de « *Synthetic Aperture* Radar ».

Les images SAR permettent notamment de détecter de petits objets, d'observer des changements de structure et de surveiller de vastes zones géographiques avec précision.

Toutefois, en pratique, les dispositifs radar opèrent souvent avec des ressources limitées, notamment en matière de stockage et de puissance de calcul. Ceci est à mettre en parallèle d'un besoin d'un grand volume d'images SAR pour l'observation de l'environnement.

Il est donc souhaitable de pouvoir recourir à des techniques de compression permettant d'optimiser l'utilisation des ressources et ainsi réduire les besoins en stockage et en transmission.

Les techniques connues ne donnent pas satisfaction dans la mesure où une compression sans perte est à réaliser, car chaque pixel de l'image peut contenir des informations cruciales pour l'analyse. En effet, les images SAR sont produites par des échos radar réfléchis, ce qui génère des textures particulières et des niveaux de bruit spécifiques.

Il existe donc un besoin pour un procédé de compression d'images utilisable pour des images radar à synthèse d'ouverture permettant une réduction des ressources impliquées sans perte des spécificités propres à cette image (texture ou niveau de bruit).

A cet effet, la description a pour objet un procédé de compression d'une image, le procédé de compression étant mis en œuvre par ordinateur et comprenant les étapes de :
- obtention d'une image binaire, l'image binaire comportant des lignes de pixels, chaque pixel comprenant un premier ensemble, le premier ensemble regroupant des bits de poids fort et un deuxième ensemble, le deuxième ensemble regroupant des bits de poids faible,
- choix d'un nombre d'éléments du premier ensemble,
- formation :
   - d'un flux des bits de poids fort étant une concaténation des premiers ensembles de chaque pixel selon un parcours successif de chaque ligne de l'image binaire, et
   - d'un flux des bits de poids faible étant une concaténation des deuxièmes ensembles de chaque pixel selon un parcours successif de chaque ligne de l'image binaire,
- établissement d'une matrice d'ensemble, la matrice d'ensemble comportant des termes agencés selon des lignes et des colonnes, les termes étant calculés à partir d'un flux choisi parmi le flux des bits de poids fort et le flux des bits de poids faible, chaque terme de la matrice d'ensemble étant égal à la concaténation de plusieurs ensembles contigus du flux choisi en parcourant successivement chaque ligne de la matrice d'ensemble, le nombre d'ensembles contigus dépendant du nombre d'éléments choisis pour le premier ensemble, et
- compression de la matrice établie pour obtenir une matrice compressée, la matrice compressée correspondant à la compression de l'image.

Suivant d'autres aspects avantageux, le procédé de compression comprend une ou plusieurs des caractéristiques suivantes, prises isolément ou suivant toutes les combinaisons techniquement possibles :
- le flux choisi est le flux des bits de poids fort ;
- le procédé comporte, en outre, une étape de test du respect d'un critère de compression par la matrice établie, l'étape de compression étant uniquement mise en œuvre lorsque le critère de compression est respecté, la matrice établie correspondant la compression de l'image lorsque le critère de compression n'est pas respecté ;
- le critère de compression est un critère d'entropie ;
- laquelle l'étape d'obtention comporte la réception d'une image et la conversion de l'image en une image binaire ;
- lors de l'étape de choix du nombre d'éléments du premier ensemble, il est choisi un nombre égal à 2^{k} et le nombre de bits d'un pixel est égal à 2^{l}, k et l étant deux entiers non nuls, le nombre d'ensembles contigus étant égal à 2^{l-k} ;
- lors de l'étape de choix du nombre d'éléments du premier ensemble, il est choisi un nombre pair 2*p et le nombre de bits d'un pixel est égal à 2^{l}, p et l étant deux entiers non nuls, le nombre d'ensembles contigus étant égal au ratio de 2^{l} par le plus grand dénominateur commun du nombre 2*p et de 2^{l}-2*p ; et
- le procédé de compression comporte une étape de mémorisation du flux de données différent du flux choisi.

La description a également pour objet un procédé d'analyse d'une image, le procédé comprenant les étapes de:
- mise en œuvre d'un tel procédé de compression, et
- transmission de la matrice d'ensemble correspondant à la compression de l'image pour analyse.

Suivant d'autres aspects avantageux, le procédé d'analyse comprend la caractéristique suivante :
- le procédé d'analyse comporte, en outre, les étapes de :
   - réception d'une requête de transmission de la matrice d'ensemble provenant du flux différent du flux choisi, et
   - transmission de la matrice d'ensemble demandée.
- le procédé de compression comporte une étape de mémorisation du flux de données différent du flux choisi.

La description concerne aussi un dispositif de compression d'une image, le dispositif de compression étant configuré pour :
- obtenir une image binaire, l'image binaire comportant des lignes de pixels, chaque pixel comprenant un premier ensemble, le premier ensemble regroupant des bits de poids fort et un deuxième ensemble, le deuxième ensemble regroupant des bits de poids faible,
- choisir un nombre d'éléments du premier ensemble,
- former :
   - un flux des bits de poids fort étant une concaténation des premiers ensembles de chaque pixel selon un parcours successif de chaque ligne de l'image binaire, et
   - un flux des bits de poids faible étant une concaténation des deuxièmes ensembles de chaque pixel selon un parcours successif de chaque ligne de l'image binaire,
- établir une matrice d'ensemble, la matrice d'ensemble comportant des termes agencés selon des lignes et des colonnes, les termes étant calculés à partir d'un flux choisi parmi le flux des bits de poids fort et le flux des bits de poids faible, chaque terme de la matrice d'ensemble étant égal à la concaténation de plusieurs ensembles contigus du flux choisi en parcourant successivement chaque ligne de la matrice d'ensemble, le nombre d'ensembles contigus dépendant du nombre d'éléments choisis pour le premier ensemble, et
- effectuer une compression de la matrice établie pour obtenir une matrice compressée, la matrice compressée correspondant à la compression de l'image.

La description décrit également un aéronef comprenant d'un dispositif d'acquisition propre à acquérir des images d'une partie de l'environnement et un dispositif de compression propre à comprimer des images obtenues par le dispositif d'acquisition, le dispositif de compression étant tel que décrit ci-dessus.

La description concerne aussi un produit programme d'ordinateur comprenant des instructions qui, lorsque le programme est exécuté par un ordinateur, conduisent celui-ci à mettre en œuvre les étapes d'un procédé tel que décrit ci-dessus.

La description décrit également un support lisible par ordinateur comprenant des instructions qui, lorsqu'elles sont exécutées par un ordinateur, conduisent celui-ci à mettre en œuvre les étapes d'un tel procédé.

Dans la présente description, l'expression « propre à » signifie indifféremment « adapté pour », « adapté à » ou « configuré pour ».

L'invention apparaîtra plus clairement à la lecture de la description qui va suivre, donnée uniquement à titre d'exemple non limitatif, et faite en référence aux dessins dans lesquels :
- la figure 1 est une représentation schématique d'un aéronef comprenant un dispositif de compression,
- la figure 2 est une représentation schématique d'un exemple de mise en œuvre d'un procédé de compression par le dispositif de compression de la figure 1,
- la figure 3 est une vue d'une image sur laquelle le procédé de compression de la figure 2 peut être mis en œuvre,
- la figure 4 illustre deux images pouvant être obtenues après traitement de l'image de la figure 3, et
- la figure 5 représente l'image originale et l'image obtenue après mise en œuvre du procédé de compression.

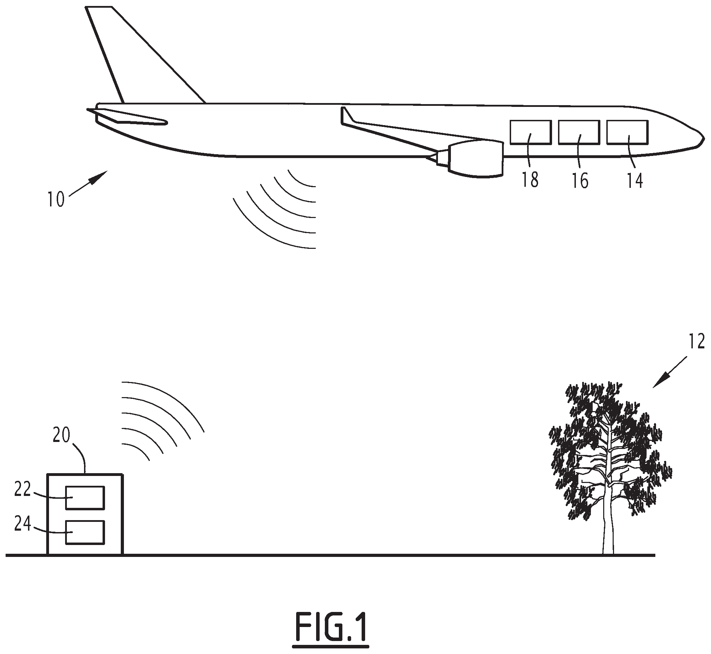

Un aéronef 10 observant un environnement 12 est représenté sur la figure 1.

Par exemple, l'aéronef 10 est un avion, un hélicoptère, un drone ou un ballon.

L'aéronef 10 est muni d'un dispositif d'acquisition 14 propre à acquérir des images d'une partie de l'environnement 12.

Selon l'exemple décrit, le dispositif d'acquisition 14 est un radar propre à obtenir des images SAR de l'environnement 12.

Le radar est, par exemple, pourvu d'une modalité d'imagerie SAR du sol.

L'aéronef 10 comprend aussi un dispositif de compression 16 et un dispositif de communication 18.

Le dispositif de compression 16 est propre à compresser les images acquises par le dispositif d'acquisition 14 selon un procédé de compression d'images qui sera décrit dans la suite de la description.

Le dispositif de compression 16 est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le dispositif de compression 16 est réalisé sous forme d'un composant logique programmable, tel qu'un FPGA (de l'anglais Field Program Gate Array), ou encore d'un circuit intégré, tel qu'un ASIC (de l'anglais Application Specific Integrated Circuit).

En variante, lorsque le procédé est réalisé sous forme d'un ou plusieurs logiciels, c'est-à-dire dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le dispositif de communication 18 est propre à communiquer le ou les résultats de la mise en œuvre du procédé de compression par le dispositif de compression 16 à destination d'un centre d'analyse 20.

Le centre d'analyse 20 comporte un dispositif de communication 22 et un dispositif d'analyse 24.

Le dispositif de communication 22 du centre d'analyse 20 est en interaction avec le dispositif de communication 18 de l'aéronef 10 pour recevoir le ou les résultats communiqués par celui-ci.

Le dispositif d'analyse 24 est propre à effectuer l'analyse des éléments fournis par le dispositif de communication 22 du centre d'analyse 20 pour en déduire des informations cherchées.

Selon les cas, le dispositif d'analyse 24 effectue l'analyse de manière autonome ou sous la supervision d'un opérateur.

Le dispositif d'analyse 24 est également un calculateur similaire au dispositif de compression 16.

Le dispositif d'analyse 24 présentant généralement des plus grandes capacités calculatoires que le dispositif de compression 16 qui est un dispositif embarqué.

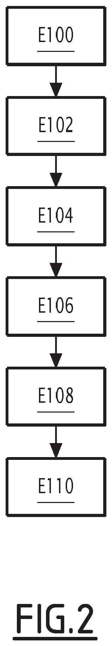

Le fonctionnement du dispositif de compression 16 est maintenant décrit en référence à la figure 2 qui illustre un exemple de mise en œuvre d'un procédé de compression.

Le procédé de compression comporte une étape d'obtention E100, une étape de choix E102, une étape de formation E104, une étape d'établissement E106 et une étape de test E108 éventuellement suivie d'une étape de compression E110.

Lors de l'étape d'obtention E100, le dispositif de compression 16 obtient une image binaire notée *I*.

En l'occurrence, le dispositif de compression 16 réalise cette étape d'obtention E100 en recevant l'image binaire *I*.

Dans l'exemple décrit, l'image binaire *I* est une image acquise par le dispositif d'acquisition 14.

L'image binaire *I* comporte un ensemble de pixels, plus précisément, n lignes et p colonnes de pixels.

A titre d'illustration, on prendra pour la suite l'hypothèse que l'image binaire *I* est carrée, c'est-à-dire le cas particulier où n=p.

Le nombre n est un nombre entier, généralement plus grand que 1000, typiquement de l'ordre de 10000 pour une image SAR.

L'image binaire *I* peut ainsi être représentée mathématiquement selon la matrice suivante : $\left(\begin{matrix}{P}_{1 , 1} & ⋯ & {P}_{1 , n} \\ ⋮ & ⋱ & ⋮ \\ {P}_{n , 1} & ⋯ & {P}_{n , n}\end{matrix}\right)$

Où *P*_{i,j} désigne la valeur du pixel situé à la ligne d'indice i et la colonne d'indice j, les nombres i et j étant deux nombres entiers compris entre 1 et n.

Chaque pixel est codé sur un nombre de bits noté *N_{b}.*

Le nombre de bits de chaque pixel est le même, définissant ainsi une longueur de codage, le plus souvent liée à la nature de l'image.

Par exemple, pour une image en nuance de gris, chaque pixel comporte 8 bits, c'est-à-dire que *N_{b} =* 8.

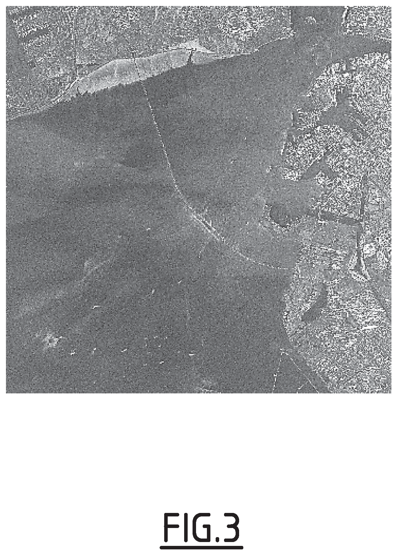

Un exemple d'image binaire *I* correspondante à un tel nombre de bits est visible sur la figure 3. Il s'agit d'une image SAR prise depuis un satellite.

De manière générale, le nombre de bits *N_{b}* d'un pixel est de la forme 2^{l} où l est un entier non nul.

Chaque pixel comprend un premier ensemble, le premier ensemble regroupant des bits de poids fort et un deuxième ensemble, le deuxième ensemble regroupant des bits de poids faible.

Les bits de poids fort sont souvent désignés par l'acronyme *MSb* qui renvoie à la dénomination anglaise correspondante de « Most Significant bit ».

Dans la suite, la notation « ensemble de bits de poids fort *MSb* » sera utilisée.

Les bits de poids faibles sont souvent désignés par l'acronyme *LSb* qui renvoie à la dénomination anglaise correspondante de « Less Significant bit ».

Dans la suite, la notation « ensemble de bits de poids faible *LSb* » sera utilisée.

En outre, il est supposé que le pixel comporte uniquement les deux ensembles. Dans des modes de réalisation plus élaborés, il pourrait être envisagé que le pixel comporte un ou plusieurs ensembles intermédiaires, l'extension à ce cas de figure étant immédiate.

Ainsi, les *N_{b}* bits d'un pixel *P*_{i,j} peuvent s'écrire comme suit :

*M*₁*_{,i,j}Mi*_{2*,i,j*} [...] *M_{X,i,j}L*₁*_{,i,j}L*_{2*,i,j*} [...] *L_{Nb-X,i,j}*

Où :
- M_{p,*i,j*} désigne le p-ième bit de poids fort *MSb* du pixel *P*_{i,j}, p étant un entier compris entre 1 et X,
- X désigne le nombre de bits de poids fort *MSb,* le nombre X étant un entier compris entre 1 et n-1, et
- *L*_{p*,i,j*} désigne le p-ième bit de poids faible *LSb* du pixel *P*_{i,j}, p étant ici un entier compris entre 1 et *N_{b} -* X.

Comme le montre cette notation, les X premiers bits *M*₁*_{,i,j}M*_{2*,i,j*} [...] *M_{N_{M},i,j}* correspondent aux bits de poids fort du pixel *P*_{i,j} et les *Y = N_{b} -* X derniers *L*₁*_{,i,j}L*_{2*,i,j*} [...] *L_{N_{b}-N_{M},i,j}* sont les bits de poids faible du pixel *P*_{i,j}.

Dans le cas correspondant à la figure 3, on peut illustrer l'image résultant de l'ensemble de bits de poids fort *MSb* et celle résultant de l'ensemble de bits de poids faible *LSb* en supposant que chacun des ensembles ait le même poids, à savoir 4 bits chacun.

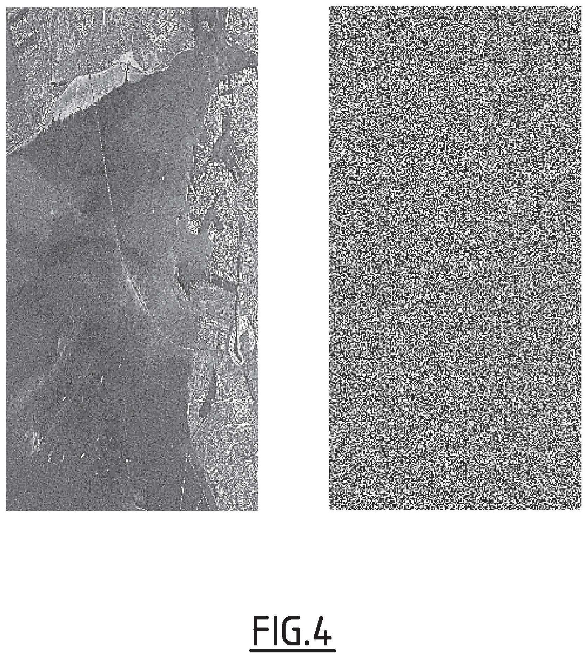

Les images ainsi obtenues sont visibles sur la figure 4, avec à gauche l'image des bits de poids fort et à droite l'image des bits de poids faible.

Pour l'image des bits de poids faible, il est à noter que, dans un souci de lisibilité, les poids faibles sont devenus des poids forts pour en observer la dynamique, sinon, l'image serait apparue noire et la différence de couleur entre chaque pixel n'aurait pas été discernable à l'œil nu.

Dans cet exemple, l'image des bits de poids fort comporte l'information principale alors que l'image des bits de poids faible correspond à du bruit.

Ainsi, il semble indiqué de privilégier l'image des bits de poids fort pour les traitements et les interactions entre l'aéronef 10 et le centre d'analyse 20.

Il existe néanmoins des cas où l'image comporte uniquement des variations portant sur les poids forts et dans ce cas, c'est l'image des bits de poids faible qui est à privilégier puisqu'aucune dynamique ne sera visible sur l'image des bits de poids fort. Un tel cas correspond à une erreur d'encodage selon laquelle il aurait fallu encoder sur 4 bits au lieu d'un encodage sur 8 bits.

Entre ces cas extrêmes, il se peut qu'à la fois l'image des bits de poids fort et l'image des bits de poids faible comportent une variation et dans un tel cas, le traitement de compression pourra être appliqué sur les deux matrices correspondant à ces images.

Lors de l'étape de choix E102, le dispositif de compression 16 choisit le nombre d'éléments du premier ensemble. Avec les notations précédentes, ce nombre est noté X.

Ce nombre est choisi en fonction d'un critère de compression, notamment un critère entropique.

Par exemple, le critère est que : $H \left(E1\right) < α . {N}_{b}$

Où:
- *H* désigne l'entropie de Shannon qui est une mesure de la quantité moyenne d'information du premier ensemble E1,
- *α* est un facteur de compression, par exemple égal à 0,5.

Plus précisément, pour chacun des plans regroupant les bits de même position de chaque pixel, il est déterminé si le critère entropique est vérifié et si oui, il s'agit d'un plan de bits faisant partie des bits de poids fort.

Cela peut s'exprimer mathématiquement comme le fait qu'on vient écrire chaque pixel sous la forme b₀b₁b₂b₃b₄b₅b₆b₇ et que le plan 0 contient uniquement tous les b0 de chaque pixel de l'image, le plan 1 contient uniquement tous les b1 de chaque pixel de l'image et ainsi de suite. On calcule ensuite *H*(*plan i*) pour chacun des plans et on compare la valeur trouvée au seuil *α.N_{b}.*

Alternativement, le nombre d'éléments du premier ensemble peut être choisi en utilisant une détection de contour. La présence de contours est le signe qu'il s'agit de bits de poids forts et leur absence la présence de bits de poids faibles.

Lors de l'étape de formation E104, le dispositif de compression 16 forme deux flux, à savoir un flux des bits de poids fort *FM* et un flux des bits de poids faible *FL.*

Le flux des bits de poids fort *FM* est une concaténation des ensembles de bits de poids fort *MSb* de chaque pixel selon un parcours successif de chaque ligne de l'image binaire *I*.

Similairement, le flux des bits de poids faible *FL* est une concaténation des ensembles de bits de poids faible *LSb* de chaque pixel selon un parcours successif de chaque ligne de l'image binaire *I*.

Par exemple, chaque flux *FM* ou *FL* est obtenu par mise en œuvre d'une opération d'extraction et d'une opération de concaténation.

Lors de l'opération d'extraction, le dispositif de compression 16 extrait chaque ensemble de chaque pixel.

Lors de l'opération de concaténation, le dispositif de compression 16 effectue une concaténation respective de chaque ensemble extrait pour former les deux flux *FM* et *FL,* la concaténation étant mise en œuvre en parcourant successivement chaque ligne de l'image binaire *I*.

Lors de l'étape d'établissement E106, le dispositif de compression 16 établit deux matrices d'ensemble, à savoir la matrice des bits de poids fort *M* et la matrice des bits de poids faible *L*.

Il est décrit l'établissement de la matrice des bits de poids fort *M*, la transposition des opérations étant immédiate pour la matrice des bits de poids faible *L*.

La matrice des bits de poids fort *M* comporte des termes agencés selon des lignes et des colonnes.

Les lignes sont repérées par un entier i compris entre 1 et le nombre de lignes N_{lig} et les colonnes sont repérées par un entier j compris entre 1 et le nombre de colonnes N_{col}.

Les termes sont calculés à partir du flux des bits de poids fort *M*.

Chaque terme de la matrice d'ensemble étant égal à la concaténation de plusieurs ensembles contigus du flux choisi en parcourant successivement chaque ligne de la matrice d'ensemble.

En notant Nₑₙₛ le nombre d'ensembles contigus, cela signifie que le terme de la matrice situé à la ligne i et à la colonne j rassemble un premier ensemble débutant à la position P1, un deuxième ensemble débutant à la position P1+X, un troisième ensemble débutant la position P1+(X+1) et ainsi de suite jusqu'au dernier ensemble débutant à la position P1+Nₑₙₛ.

La position P1 respecte la relation mathématique suivante : $P 1 = \left[\left(i-1\right)∗{N}_{col}+j\right] ∗ {N}_{ens}$

Le nombre d'ensembles contigus Nₑₙₛ dépend du nombre d'éléments X choisis pour le premier ensemble.

Plusieurs cas de figure sont envisageables.

Lorsque le nombre d'éléments X choisis pour l'ensemble de bits de poids fort *MSb* peut s'écrire sous la forme 2^{k} avec k un entier non nul, le nombre d'ensembles contigus Nₑₙₛ est défini par la relation mathématique suivante : ${N}_{ens} = \frac{{N}_{b}}{X} = \frac{{2}^{l}}{{2}^{k}} = {2}^{l - k}$

Ainsi, dans ce cas, chaque terme de la matrice des bits de poids fort M représente 2^{*l*-*k*} pixels de l'image binaire *I* tandis que chaque terme de la matrice des bits de poids faible *L* représente $\frac{{N}_{b} - X}{X} = \frac{{2}^{l} - {2}^{k}}{{2}^{k}}$ pixels de l'image binaire *I.*

Il peut être noté ici que si le nombre d'éléments X choisis pour l'ensemble de bits de poids fort *M* est égal au nombre d'éléments Y de l'ensemble de bits de poids faible *L*, alors chaque terme des deux matrices de bits de poids fort *M* et de bits de poids faible *L* représente 2*^{l}* - 2*^{k}* pixels de l'image binaire *I.*

Un deuxième cas correspond au cas où le nombre d'éléments X choisi pour l'ensemble de bits de poids fort M ne peut pas s'écrire sous la forme 2^{k} mais est un nombre pair qui peut s'écrire sous la forme 2*p où p est un entier non nul.

Dans un tel cas, le nombre d'ensembles contigus Nₑₙₛ est défini par la relation mathématique suivante : ${N}_{ens} = \frac{{N}_{b}}{pgcd \left(X, Y\right)} = \frac{{2}^{l}}{pgcd \left(X, Y\right)}$

Où pgcd désigne le plus grand diviseur commun.

Ainsi, dans ce cas, chaque terme de la matrice des bits de poids fort *MSb* représente $\frac{X}{pgcd \left(X, Y\right)}$ pixels de l'image binaire *I* tandis que chaque terme de la matrice des bits de poids faible *LSb* représente $\frac{Y}{pgcd \left(X, Y\right)}$ pixels de l'image binaire *I.*

Selon un troisième cas, le nombre d'éléments X choisis pour l'ensemble de bits de poids fort *MSb* est un nombre impair.

Dans ce cas, le nombre d'ensembles contigus Nₑₙₛ est égal *à N_{b}.*

Ainsi, chaque terme de la matrice des bits de poids fort *M* représente X pixels de l'image binaire *I* tandis que chaque terme de la matrice des bits de poids faible *LSb* représente Y pixels de l'image binaire *I.*

De préférence, il sera donc privilégié pour le choix du nombre X soit le premier cas soit le deuxième cas.

Pour la suite, à titre d'exemple, l'étape d'établissement E106 est plus spécifiquement illustré le premier cas, à savoir le cas où X = Y = 2^{k}. En outre, cet exemple correspond au cas d'utilisation le plus usuel.

Cela implique que *Nₑₙₛ =* 2.

En effet, 2^{k}+2^{k}=2^{l}, c'est-à-dire k+1=I, ce qui conduit à *Nₑₙₛ* = 2*^{l-k}* = 2^{(*k+*1*)-k*} = 2.

La matrice des bits de poids fort *M* s'écrit alors : $M = \left(\begin{matrix}{M}_{1 , 1} & ⋯ & {M}_{1 , \frac{n}{2}} \\ ⋮ & ⋱ & ⋮ \\ {M}_{n , 1} & ⋯ & {M}_{n , \frac{n}{2}}\end{matrix}\right)$

Similairement, la matrice des bits de poids faible *L* s'écrit : $L = \left(\begin{matrix}{L}_{1 , 1} & ⋯ & {L}_{1 , \frac{n}{2}} \\ ⋮ & ⋱ & ⋮ \\ {L}_{n , 1} & ⋯ & {L}_{n , \frac{n}{2}}\end{matrix}\right)$

En appliquant les formules données précédemment, le premier terme *M*_{1,1} de la matrice des bits de poids fort *M* s'écrit : ${M}_{1 , 1} = {M}_{1 , 1 , 1} {M}_{2 , 1 , 1} \left[…\right] {M}_{X , 1 , 1} {M}_{1 , 1 , 2} {M}_{2 , 1 , 2} \left[…\right] {M}_{X , 1 , 2}$

Similairement, le premier terme *L*_{1,1} de la matrice des bits de poids faible L s'écrit : ${L}_{1 , 1} = {L}_{1 , 1 , 1} {L}_{2 , 1 , 1} \left[…\right] {L}_{{N}_{b} - X , 1 , 1} {L}_{1 , 1 , 2} {L}_{2 , 1 , 2} \left[…\right] {L}_{{N}_{b} - X , 1 , 2}$

En constatant que X= Y et qu'ainsi N_{b}-X=Y, l'expression précédente devient : ${L}_{1 , 1} = {L}_{1 , 1 , 1} {L}_{2 , 1 , 1} \left[…\right] {L}_{X , 1 , 1} {L}_{1 , 1 , 2} {L}_{2 , 1 , 2} \left[…\right] {L}_{X , 1 , 2}$

Des expressions similaires peuvent être obtenues pour les termes suivants de chacune des deux matrices *M* et L.

Il est ainsi obtenu les deux matrices *M* et L.

Lors de l'étape de test E108, le dispositif de compression 16 teste si une des deux matrices respecte un critère de compression.

Comme expliqué précédemment en référence à la figure 4, la matrice pour laquelle le dispositif de compression 16 applique l'étape de test E108 sur la matrice des bits de poids fort *M*.

Le critère de compression est, par exemple, un critère entropique.

Cela permet de mesurer le désordre de l'image correspondant à la matrice.

Typiquement, si l'entropie globale de la matrice des poids forts *M* est intéressante c'est-à-dire en deçà d'un certain seuil fixé à l'avance, alors l'étape de compression E110 est mise en œuvre.

A contrario, lorsque le critère de compression n'est pas respecté, la matrice établie, c'est-à-dire la matrice des bits de poids fort *M* correspond à la compression de l'image binaire *I*.

Lors de l'étape de compression E110, le dispositif de compression 16 applique une technique de compression sur la matrice établie.

La technique de compression est, ici, une technique de compression sans pertes.

Par exemple, une technique de compression avantageuse dans ce contexte est d'exploiter la manière dont la matrice des bits de poids fort *M* est établie.

En effet, en regroupant des ensembles des pixels voisins, l'apparition de répétitions au sein de chaque terme de la matrice a été favorisée, c'est l'occurrence du fait que deux ensembles soient identiques au sein du même terme. Cela est dû au fait que deux pixels juxtaposés ont plus de probabilité de présenter des poids forts égaux sauf en cas de rupture de couleur entre les deux pixels.

Autrement formulé, pour le premier terme, en présence d'une répétition, il vient : ${M}_{1 , 1 , 1} {M}_{2 , 1 , 1} \left[…\right] {M}_{X , 1 , 1} = {M}_{1 , 1 , 2} {M}_{2 , 1 , 2} \left[…\right] {M}_{X , 1 , 2}$

Ce qui implique qu'on peut écrire pour la valeur du premier terme : ${M}_{1 , 1} = {M}_{1 , 1 , 1} {M}_{2 , 1 , 1} \left[…\right] {M}_{X , 1 , 1} {M}_{1 , 1 , 1} {M}_{2 , 1 , 1} \left[…\right] {M}_{X , 1 , 1}$

La technique de compression consiste alors à supprimer la répétition pour ne garder qu'une seule fois l'ensemble qui est répété.

La matrice compressée *M_{comp}* correspond alors la compression de l'image de la matrice des bits de poids fort *M*.

L'étape de test E108 non obligatoire permet ici d'éviter de mettre en œuvre une technique de compression sur une matrice d'ensemble qui ne présenterait pas assez de dynamique pour permettre une compression efficace.

Pour bien comprendre cette efficacité de la technique de compression, il peut être pris un exemple simple sur une image encodée sur 4 bits avec le choix d'une configuration avec pour tout pixel *P*(*i, j*)*,* deux bits de poids fort *MSb* (*M*₁*_{,i,j}M*_{2*,i,j*}) et deux bits de poids faibles LSb (*L*₁*_{,i,j}L*_{2,*i,j*} ), ce qui correspond à la relation mathématique suivante : $∀ \left(i, j\right) ∈ {\left[1:n\right]}^{2} , P \left(i, j\right) = {M}_{1 , i , j} {M}_{2 , i , j} {L}_{1 , i , j} {L}_{2 , i , j}$

Les valeurs possibles pour les différents pixels sont donc les seize du tableau suivant.

### [Table 1]

**Tableau 1: Valeurs possibles pour un encodage sur 4 bits**

| *Valeur décimale* | *Code binaire associé* | *Valeur décimale* | *Code binaire associé* | *Valeur décimale* | *Code binaire associé* | *Valeur décimale* | *Code binaire associé* |
|---|---|---|---|---|---|---|---|
| 0 | **00**00 | 4 | **01**00 | 8 | **10**00 | 12 | **11**00 |
| 1 | **00**01 | 5 | **01**01 | 9 | **10**01 | 13 | **11**01 |
| 2 | **00**10 | 6 | **01**10 | 10 | **10**10 | 14 | **11**10 |
| 3 | **00**11 | 7 | **01**11 | 11 | **10**11 | 15 | **11**11 |

*Dans* ce *tableau, les bits de poids fort sont indiqués en gras.*

En présence d'une image présentant une très faible dynamique ayant des valeurs comprises entre 0 et 3, l'image apparaîtra noire et, pour les valeurs associées aux pixels, le dispositif de compression 16 s'intéresse à la première colonne du tableau.

Les bits de poids faible *LSb* varient tandis que les bits de poids fort *MSb* sont constants et égaux à 00.

Ainsi, un pixel *P*(*i, j*) quelconque de l'image s'écrira sous la forme suivante : $P \left(i, j\right) = 00 {L}_{1 , i , j} {L}_{2 , i , j}$

En appliquant le procédé décrit précédemment, la décomposition de l'image en bits de poids forts et faibles regroupant ainsi les bits selon les deux matrices *M* et 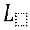 engendrera que tous les pixels de la matrice des bits de poids fort M seront égaux à 0000.

Par ailleurs, en considérant les poids faibles de deux pixels voisins *P*_{*i*,*j*} (*L*) = *L*₁*_{,i,j}L*_{2*,i,j*} et *P*_{*i+*1*,j+*1} (*L*) = *L*_{1*,i+*1*,j+*1}*L*_{2*,i+*1,*j+*1}, les termes de la matrice des bits de poids fort *L,* il est obtenu les quatre combinaisons suivantes :

### [Table 2]

**Tableau 2: Combinaisons possibles pour les bits de poids faible LSb**

| | | |
|---|---|---|
| *P*_{i,j} (L) | 00 | 01 |
| *P*_{*i+*1*,j+*1} (L) | | |
| 00 | 00**00** | 00**01** |
| 01 | 01**01** | 01**01** |

La matrice de bits de poids faible L contient quatre fois plus de symboles que la matrice de bits de poids fort M.

Cet exemple simple permet d'illustrer le potentiel du procédé, car la matrice de bits de poids fort M ne présente qu'un symbole '0000' ce qui est le signe d'une compression très forte, permettant une analyse immédiate qu'il s'agit d'une zone très noire.

Il ainsi été décrit un procédé de compression reposant sur une division de l'image en deux ensembles correspondant à deux plans de bits.

Dans l'hypothèse faite, l'ensemble des bits de poids forts représentent les informations principales de l'image binaire, tandis que l'ensemble des bits de poids faibles contiennent des détails supplémentaires, souvent considérés comme du bruit.

Le procédé permet également une adaptation de la granulosité de la compression par le choix de la répartition entre les bits de poids fort *MSb* et les bits de poids faible *LSb* à l'étape de choix E102.

Le procédé de compression est ainsi une technique de segmentation d'image basée une décomposition de l'image en bits de poids forts et bits de poids faibles avec un regroupement astucieux de ces poids en deux matrices de taille plus faibles que l'image de base. Il présente une meilleure adaptabilité, une réduction significative du temps de traitement (notamment à comparer au temps qu'une compression globale de l'image binaire exige), et une robustesse accrue aux variations d'intensité et de texture.

Cela est avantageusement utilisé pour l'analyse de l'image binaire, ceci étant maintenant illustré à travers la mise en œuvre d'un procédé d'analyse d'une image, qui est supposé ici être l'image binaire *I.*

Ce procédé comporte une étape de mise en œuvre des étapes du procédé de compression précédemment décrit par le dispositif de compression 16.

Il est ainsi obtenu une matrice de bits de poids fort compressée *M_{comp}.*

Le dispositif de communication 18 de l'aéronef 10 transmet cette matrice de bits de poids fort compressée *M_{comp}* à destination du dispositif de communication 22 du centre d'analyse 20.

Le dispositif d'analyse 24 procède alors à l'analyse de la matrice de bits de poids fort compressée *M_{comp}* pour déterminer une ou plusieurs informations relatives à l'environnement 12 capté par le dispositif d'acquisition 14 ayant permis d'obtenir l'image binaire *I*.

La détection d'un objet est un exemple d'informations cherchées dans l'environnement 12.

Selon un mode de réalisation, le dispositif d'analyse 24 applique un traitement pour diminuer la distorsion liée à la technique utilisée pour rassemblement les pixels.

Pour cela, le dispositif d'analyse 20 peut recréer une image en réalisant une déconcaténation des pixels de la matrice de bits de poids fort compressée *M_{comp}* puis en ajoutant une valeur nulle pour les bits de poids faible *LSb.* Cela revient virtuellement à avoir l'image originale sur laquelle tous les bits de poids faible *LSb* sont passés à 0.

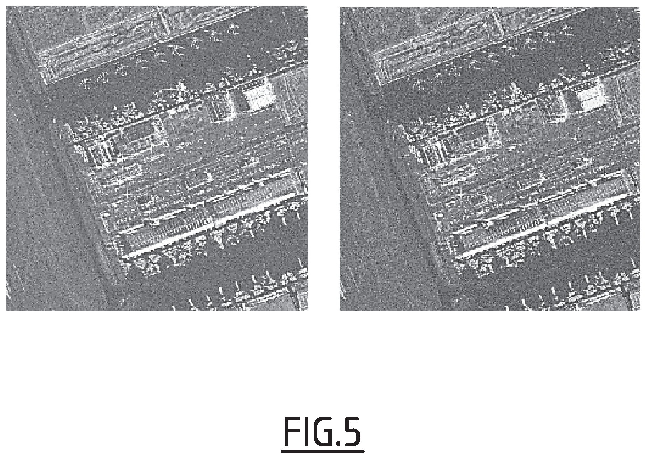

Le résultat après application de ce traitement de diminution de la distorsion est visible sur la figure 5.

Dans cette figure, l'image de gauche est l'image obtenue avec la matrice de bits de poids fort compressée *M_{comp}* alors que l'image de droite représente l'image originale.

On voit bien que l'image de gauche est exploitable dans la mesure où elle permet d'identifier les objets d'intérêts, tel un bâtiment ou une route.

Si la matrice de bits de poids fort compressée *M_{comp}* suffit pour déterminer les informations cherchées, seule la moitié de l'image binaire *I* est traitée par la technique de compression et uniquement une demi-image est transmise via la matrice de bits de poids fort compressée *M_{comp}.* II en résulte en gain en temps de calcul et un gain en vitesse de transmission.

Cela permet un processus d'analyse rapide, et le cas échéant une prise de décision rapide en fonction des informations ainsi rendues disponibles.

Dans le cas où la matrice de bits de poids fort compressée *M_{comp}* ne suffit pas pour déterminer les informations cherchées, le procédé d'analyse peut comporter des étapes supplémentaires. C'est notamment le cas si des détails sont nécessaires pour obtenir lesdites informations.

Le centre d'analyse 20 demande alors la transmission de la matrice de bits de poids faible L via son dispositif de communication 22.

Le dispositif de communication 18 de l'aéronef 10 reçoit alors une requête de transmission de la matrice de bits de poids faible *L*.

Le dispositif de communication 18 interagit avec le dispositif de compression 16 pour obtenir cette matrice puis la transmet au dispositif de communication 22 du centre d'analyse 20.

Le dispositif d'analyse 24 peut alors approfondir l'analyse effectuée avec la matrice de bits de poids fort compressée *M_{comp}.*

Même dans ce cas, le procédé est plus rapide dans la mesure où à la réception de la deuxième matrice, l'analyse globale a déjà été effectuée, ce qui a déjà permis d'obtenir au moins une des informations à déterminer.

Ce procédé bénéficie d'une capacité à alléger le volume de données à transmettre, en ne traitant qu'une partie de l'image tout en garantissant la rapidité d'exécution et la fidélité des informations essentielles. Ainsi, un tel procédé se révèle adapté aux contraintes des environnements aéroportés, offrant un équilibre idéal entre performance, efficacité et prise décision rapide.

Cet avantage peut être utilisé pour tout type d'images, y compris des images qui ne sont pas nativement en nuances de gris.

Dans un tel cas, l'étape d'obtention E100 comporte la réception d'une image et la conversion de l'image en une image binaire *I*.

Par exemple, pour une image visible codée sur trois canaux rouge, vert et bleu (image souvent appelée RGB en référence à la dénomination anglaise correspondante de « red, green, blue »), il convient d'effectuer une conversion depuis le codage natif souvent sur 24 bits en un codage en niveau de gris, souvent sur 8 bits.

Une telle conversion est réalisable en utilisant une combinaison pondérée des trois canaux, pour prendre en compte la perception humaine des couleurs.

Par exemple, la formule suivante est utilisée pour chaque pixel de l'image : $Gris = 0 , 299 \times R + 0 , 587 \times G + 0 , 114 \times B$

Où :
- *Gris* désigne la valeur cherchée du niveau de gris d'un pixel,
- *R* désigne la valeur du canal rouge d'un pixel,
- *G* désigne la valeur du canal vert d'un pixel, et
- *B* désigne la valeur du canal bleu d'un pixel.

Cette formule prend en compte la différence de luminosité perçue entre les couleurs vertes, les rouges et les bleues.

Une fois que la valeur en niveaux de gris est calculée, le dispositif de compression 16 met en œuvre une réduction en 8 bits pour obtenir des niveaux de gris allant de 0 à 255.

Une fois la conversion réalisée, une seule valeur est attribuée à chaque pixel, ce qui donne une image en niveaux de gris codé sur 8 bits.

En variante ou en complément, il peut être utilisé une transformation logarithmique pour mieux gérer les zones très lumineuses ou très sombres de l'image.

Une telle transformation est de la forme c*log_{b}(x) où c est une constante de mise à l'échelle et b la base du logarithme.

La constante de mise à l'échelle c est choisie en fonction de l'intensité de l'effet recherché.

La base b choisie dépend du contexte et de l'effet souhaité.

A titre d'exemple particulier, la base 10 étend la gamme des valeurs pour les petites intensités et compresse la gamme pour les grandes intensités. Cela permet de mieux gérer les zones sombres de l'image, tout en gardant des détails dans les zones lumineuses.

La base 2 est aussi envisageable dans le contexte du procédé de compression dans la mesure où il s'appuie sur les puissances de 2.

Avec une telle opération de conversion, le procédé de compression est utilisable avec une bonne efficacité pour des images optiques, notamment dans le visible et dans l'infrarouge.

Notamment, au cours du procédé de compression, le flux de données différent du flux choisi, notamment le flux de bits de poids faible *FM*, est stocké par le dispositif de compression 16 en vue d'une analyse ultérieure. Par exemple, le flux de bits de poids faible *FM* est stocké tel qu'il a été formé. Selon un mode de réalisation spécifique, le flux de bits de poids faible *FM* est compressé sans pertes de données.

En variante, la matrice établie à partir du flux de données différent du flux choisi, notamment la matrice de bits de poids faible *L*, est stockée par le dispositif de compression 16 en vue d'une analyse ultérieure. Par exemple, la matrice de bits de poids faible *L* est stockée tel qu'il a été formé. Selon un mode de réalisation spécifique, la matrice de bits de poids faible *L* est compressée sans pertes de données.

Le stockage de la matrice établie à partir du flux de données différent du flux choisi permet d'envoyer ladite matrice en vue de son analyse uniquement lorsque cela est nécessaire.

L'utilité du stockage du flux de données différent du flux choisi est similaire mais permet d'éviter le calcul de la matrice établie par le dispositif de compression 16 lorsque cela n'est pas nécessaire. Cela est particulièrement avantageux lorsque ledit dispositif de compression 16 est embarqué dans l'aéronef 10.

## Revendications

1. Procédé de compression d'une image, le procédé de compression étant mis en œuvre par ordinateur et comprenant les étapes de :
- obtention (E100) d'une image binaire, l'image binaire comportant des lignes de pixels, chaque pixel comprenant un premier ensemble, le premier ensemble regroupant des bits de poids fort et un deuxième ensemble, le deuxième ensemble regroupant des bits de poids faible,
- choix (E102) d'un nombre d'éléments du premier ensemble,
- formation (E104) :
- d'un flux des bits de poids fort étant une concaténation des premiers ensembles de chaque pixel selon un parcours successif de chaque ligne de l'image binaire, et
- d'un flux des bits de poids faible étant une concaténation des deuxièmes ensembles de chaque pixel selon un parcours successif de chaque ligne de l'image binaire,
- établissement (E106) d'une matrice d'ensemble, la matrice d'ensemble comportant des termes agencés selon des lignes et des colonnes, les termes étant calculés à partir d'un flux choisi parmi le flux des bits de poids fort et le flux des bits de poids faible, chaque terme de la matrice d'ensemble étant égal à la concaténation de plusieurs ensembles contigus du flux choisi en parcourant successivement chaque ligne de la matrice d'ensemble, le nombre d'ensembles contigus dépendant du nombre d'éléments choisis pour le premier ensemble, et
- compression (E110) de la matrice établie pour obtenir une matrice compressée, la matrice compressée correspondant à la compression de l'image.

2. Procédé de compression selon la revendication 1, dans lequel le flux choisi est le flux des bits de poids fort.

3. Procédé de compression selon la revendication 1 ou 2, dans lequel le procédé comporte, en outre, une étape de test (E108) du respect d'un critère de compression par la matrice établie, l'étape de compression étant uniquement mise en œuvre lorsque le critère de compression est respecté, la matrice établie correspondant à la compression de l'image lorsque le critère de compression n'est pas respecté.

4. Procédé de compression selon la revendication 3, dans lequel le critère de compression est un critère d'entropie.

5. Procédé de compression selon l'une quelconque des revendications 1 à 4, dans laquelle l'étape d'obtention comporte la réception d'une image et la conversion de l'image en une image binaire.

6. Procédé de compression selon l'une quelconque des revendications 1 à 5, dans lequel lors de l'étape de choix du nombre d'éléments du premier ensemble, il est choisi un nombre égal à 2^{k} et le nombre de bits d'un pixel est égal à 2^{l}, k et l étant deux entiers non nuls, le nombre d'ensembles contigus étant égal à 2^{l-k}.

7. Procédé de compression selon l'une quelconque des revendications 1 à 5, dans lequel lors de l'étape de choix du nombre d'éléments du premier ensemble, il est choisi un nombre pair 2*p et le nombre de bits d'un pixel est égal à 2^{l}, p et l étant deux entiers non nuls, le nombre d'ensembles contigus étant égal au ratio de 2^{l} par le plus grand dénominateur commun du nombre 2*p et de 2^{l}-2*p.

8. Procédé d'analyse d'une image, le procédé comprenant les étapes de:
- mise en œuvre d'un procédé de compression selon l'une quelconque des revendications 1 à 7, et
- transmission de la matrice d'ensemble correspondant à la compression de l'image pour analyse.

9. Procédé d'analyse selon la revendication 8, dans lequel le procédé d'analyse comporte, en outre, les étapes de :
- réception d'une requête de transmission de la matrice d'ensemble provenant du flux différent du flux choisi, et
- transmission de la matrice d'ensemble demandée.

10. Dispositif de compression (16) d'une image, le dispositif de compression (16) étant configuré pour :
- obtenir une image binaire, l'image binaire comportant des lignes de pixels, chaque pixel comprenant un premier ensemble, le premier ensemble regroupant des bits de poids fort et un deuxième ensemble, le deuxième ensemble regroupant des bits de poids faible,
- choisir un nombre d'éléments du premier ensemble,
- former :
- un flux des bits de poids fort étant une concaténation des premiers ensembles de chaque pixel selon un parcours successif de chaque ligne de l'image binaire, et
- un flux des bits de poids faible étant une concaténation des deuxièmes ensembles de chaque pixel selon un parcours successif de chaque ligne de l'image binaire,
- établir une matrice d'ensemble, la matrice d'ensemble comportant des termes agencés selon des lignes et des colonnes, les termes étant calculés à partir d'un flux choisi parmi le flux des bits de poids fort et le flux des bits de poids faible, chaque terme de la matrice d'ensemble étant égal à la concaténation de plusieurs ensembles contigus du flux choisi en parcourant successivement chaque ligne de la matrice d'ensemble, le nombre d'ensembles contigus dépendant du nombre d'éléments choisis pour le premier ensemble, et
- effectuer une compression de la matrice établie pour obtenir une matrice compressée, la matrice compressée correspondant à la compression de l'image.

11. Aéronef (10) comprenant d'un dispositif d'acquisition (14) propre à acquérir des images d'une partie de l'environnement (12) et un dispositif de compression (16) propre à comprimer des images obtenues par le dispositif d'acquisition, le dispositif de compression (16) étant selon la revendication 10.

12. Produit programme d'ordinateur comprenant des instructions qui, lorsque le programme est exécuté par un ordinateur, conduisent celui-ci à mettre en œuvre les étapes d'un procédé selon l'une quelconque des revendications 1 à 9.

13. Support lisible par ordinateur comprenant des instructions qui, lorsqu'elles sont exécutées par un ordinateur, conduisent celui-ci à mettre en œuvre les étapes d'un procédé selon l'une quelconque des revendications 1 à 9.
